# EUROPEAN PATENT SPECIFICATION

(11) **EP 3 275 842 B1**
(45) Date of publication and mention of the grant of the patent: **11.11.2020**
(21) Application number: 17174421.2
(22) Date of filing: 05.06.2017
(51) Int. Cl.: C02F 1/44, C02F 1/461, E03B 3/28, C02F 1/28

(54) **STANDBY WATER SOURCE FILTER SYSTEM**
BEREITSCHAFTSBETRIEB-WASSERQUELLENFILTERSYSTEM
SYSTÈME DE FILTRE DE SOURCE D'EAU AUXILIAIRE

(30) Priority: 26.07.2016 CN 201620792468 U
(43) Date of publication of application: 31.01.2018
(73) Proprietor: Ng, Tat Yung, North Point (HK)
(72) Inventor: Ng, Tat Yung, North Point (HK)
(74) Representative: Cabinet Chaillot

(56) References cited:
- EP-A1- 3 275 520
- CN-A- 101 456 642
- CN-A- 105 174 543
- CN-U- 203 513 414
- CN-U- 204 958 614
- CN-U- 205 367 959
- CN-Y- 2 711 149

## Description

### BACKGROUND OF THE INVENTION

### Technical Field

The invention relates to water treatment equipment, in particular to a standby water source filter system.

### 2. Description of Related Art

Existing fresh water resources which can be easily utilized by humans are mainly from rivers, lakes and shallow groundwater; fresh water resources are deficient due to large consumption, and clean water resources in places with abundant electricity and energy are also relatively deficient and need to be saved and protected due to serious pollution and extremely imbalanced regional distribution; water resources have already been precious resources for humans, and water resource problems have even become a major strategy concerning sustainable development of the national economy and society, and lasting political stability.

In certain remote arid and distressed areas where clean water resources are extremely difficult to obtain and water resource shortages exist, it is hard to lay long delivery pipelines for long-distance supply of drinking water, or to transport drinking water back and forth through transportation facilities without considering transportation costs, or to mount large water quality optimization systems, and consequentially, the cost of safe drinking water becomes extremely high; besides the high drinking water cost, water quality changes or secondary pollution can be caused by long-distance delivery or transportation, and consequentially, water cannot be directly drunk by people safely.

Although the personal demand for drinking water of people in daily life is not large, the requirements for the sanitation, cleanliness, sterility and non-toxicity of the drinking water are high; drinkable pure water can be obtained through air purification and condensation, however, a standby water source is needed when the pure water obtained through air purification and condensation is insufficient in certain seasons or in places with insufficient air humidity. Since water supplied by the standby water source generally cannot meet the water-production standards, the service life of downstream water-production equipment is affected, and the water can only enter a downstream water-production system after being treated.

CN 204 958 614 U, CN 105 174 543 A and CN 2 711 149 Y each discloses a standby water source filter system as defined in the preamble of claim 1. CN 101 456 642 A and CN 205 367 959 U both discloses a standby water source filter system comprising a filter device, a water softening equipment, a water pump and a reverse osmosis device sequentially connected in series.

### BRIEF SUMMARY OF THE INVENTION

For solving the technical problems, the invention provides a standby water source filter system which can pre-treat water provided by a standby water source.

According to the technical scheme adopted by the invention for solving the technical problems, the standby water source filter system comprises a filter device and a water pump, and further comprises water softening equipment and a reverse osmosis (RO) device with the water pump being connected between them, wherein the filter device, the water softening equipment and the reverse osmosis (RO) device are sequentially connected in series, an inlet of the filter device is connected with the standby water source, and an outlet of the reverse osmosis (RO) device is connected with downstream water-production equipment, wherein the filter device comprises a fiber filter, a quartz sand filter and an active carbon filter, wherein the fiber filter, the quartz sand filter and the active carbon filter are sequentially connected in series, the standby water source filter system being characterized in that an inlet of the fiber filter is connected with the standby water source, and an outlet of the active carbon filter is connected with the water softening equipment, and in that the fiber filter comprises a PP cotton filer and a fiber mesh filter.

Preferably, the water pump is a high-pressure water pump.

Preferably, the standby water source filter system is characterized by comprising an RO protection filter, wherein the RO protection filter is connected between the water softening equipment and the water pump.

The standby water source filter system of the invention can remove impurities, bacteria and saline matter in water through filtering, softening and reverse osmosis (RO), raw material water conditions required by the downstream water-production equipment are met, and the service life of the downstream water-production equipment is prolonged.

### BRIEF DESCRIPTION OF THE SEVERAL VIEWS OF THE DRAWINGS

A further detailed description of the invention is given with the accompanying drawing and the specific execution mode as follows.

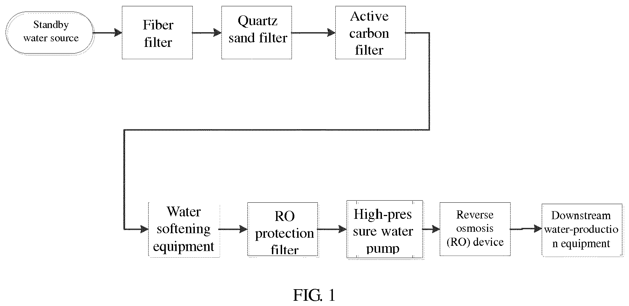

FIG. 1 is a chart of a standby water source filter system of an embodiment of the invention.

### DETAILED DESCRIPTION OF THE INVENTION

FIG. 1 shows the structure of a standby water source filter system of an embodiment of the invention, and the standby water source filter system comprises a filter device, a high-pressure water pump, water softening equipment, an RO protection filter and a reverse osmosis (RO) device, wherein the filter device, the water softening equipment, the RO protection filter and the reverse osmosis (RO) device are sequentially connected in series, the high-pressure water pump is connected between the RO protection filter and the reverse osmosis (RO) device, an inlet of the filter device is connected with a standby water source, and an outlet of the reverse osmosis (RO) device is connected with downstream water-production equipment.

Wherein, the filter device comprises a fiber filter, a quartz sand filter and an active carbon filter, the fiber filter, the quartz sand filter and the active carbon filter are sequentially connected in series, an inlet of the fiber filter is connected with the standby water source, and an outlet of the active carbon filter is connected with the water softening equipment.

In the embodiment, the fiber filter comprises a PP cotton filter and a fiber mesh filter.

According to the standby water source filter system of the embodiment of the invention, impurities in the standby water source which can be tap water or a polluted water source are removed through the PP cotton filter, the quartz sand filter and the active carbon filter, then water is softened through electrolysis by the water softening equipment, the softened water then enters the RO protection filter, and the water source is pressurized through the high-pressure water pump and directly pumped to a reverse osmosis (RO) system to be purified. Finally, the purified water source is connected to the downstream water-production equipment.

In this way, when the air humidity is too low, an air conversion and condensation electro-magnetization system can use tap water or a polluted water source as the standby water source for producing bottled magnetized pure water through the standby water source filter system.

## Claims

1. A standby water source filter system, comprising a filter device and a water pump, and further comprising water softening equipment and a reverse osmosis (RO) device with the water pump being connected between them, wherein the filter device, the water softening equipment and the reverse osmosis (RO) device are sequentially connected in series, an inlet of the filter device is connected with a standby water source, and an outlet of the reverse osmosis (RO) device is connected with downstream water-production equipment, wherein the filter device comprises a fiber filter, a quartz sand filter and an active carbon filter, sequentially connected in series, the standby water source filter system being **characterized in that** an inlet of the fiber filter is connected with the standby water source and an outlet of the active carbon filter is connected with the water softening equipment, and **in that** the fiber filter comprises a PP cotton filter and a fiber mesh filter.

2. The standby water source filter system according to Claim 1, **characterized in that** the water pump is a high-pressure water pump.

3. The standby water source filter system according to Claim 2, **characterized by** comprising an RO protection filter, wherein the RO protection filter is connected between the water softening equipment and the water pump.

## Patentansprüche

1. Filtersystem einer Ersatzwasserquelle, umfassend eine Filtervorrichtung und eine Wasserpumpe und ferner umfassend eine Wasserenthärtungseinrichtung und eine Umkehrosmose-(RO-)Vorrichtung mit der Wasserpumpe dazwischen geschaltet, wobei die Filtervorrichtung, die Wasserenthärtungseinrichtung und die Umkehrosmose-(RO-)Vorrichtung nacheinander in Reihe geschaltet sind, ein Einlass der Filtervorrichtung mit einer Ersatzwasserquelle verbunden ist, und ein Auslass der Umkehrosmose-(RO-)Vorrichtung mit einer stromabwärts gelegenen Wassererzeugungseinrichtung verbunden ist, wobei die Filtervorrichtung ein Faserfilter, ein Quarzsandfilter und ein Aktivkohlefilter umfasst, die nacheinander in Reihe geschaltet sind, wobei das Filtersystem der Ersatzwasserquelle **dadurch gekennzeichnet ist, dass** ein Einlass des Faserfilters mit der Ersatzwasserquelle verbunden ist, und ein Auslass des Aktivkohlefilters mit der Wasserenthärtungseinrichtung verbunden ist, und dadurch, dass das Faserfilter ein PP-Baumwollfilter und ein Fasernetzfilter umfasst.

2. Filtersystem einer Ersatzwasserquelle nach Anspruch 1, **dadurch gekennzeichnet, dass** die Wasserpumpe eine Hochdruck-Wasserpumpe ist.

3. Filtersystem einer Ersatzwasserquelle nach Anspruch 2, **dadurch gekennzeichnet, dass** es ein RO-Schutzfilter umfasst, wobei das RO-Schutzfilter zwischen die Wasserenthärtungseinrichtung und die Wasserpumpe geschaltet ist.

## Revendications

1. Système de filtre de source d'eau auxiliaire, comprenant un dispositif de filtre et une pompe à eau, et comprenant en outre un équipement d'adoucissement d'eau et un dispositif d'osmose inverse (OI), la pompe à eau étant reliée entre eux, le dispositif de filtre, l'équipement d'adoucissement d'eau et le dispositif d'osmose inverse (OI) étant reliés de manière séquentielle en série, une entrée du dispositif de filtre étant reliée à une source d'eau auxiliaire, et une sortie du dispositif d'osmose inverse (OI) étant reliée à un équipement de production d'eau en aval, le dispositif de filtre comprenant un filtre à fibres, un filtre à sable de quartz et un filtre à charbon actif reliés de manière séquentielle en série, le système de filtre de source d'eau auxiliaire étant **caractérisé par le fait qu'**une entrée du filtre à fibres est reliée à la source d'eau auxiliaire et une sortie du filtre à charbon actif est reliée à l'équipement d'adoucissement d'eau, et **par le fait que** le filtre à fibres comprend un filtre à coton PP et un filtre à tamis fibreux.

2. Système de filtre de source d'eau auxiliaire selon la revendication 1, **caractérisé par le fait que** la pompe à eau est une pompe à eau haute pression.

3. Système de filtre de source d'eau auxiliaire selon la revendication 2, **caractérisé par le fait qu'**il comprend un filtre de protection OI, le filtre de protection OI étant relié entre l'équipement d'adoucissement d'eau et la pompe à eau.
